# EUROPEAN PATENT APPLICATION

(11) **EP 4 663 929 A1**
(43) Date of publication of application: **17.12.2025**
(21) Application number: 24182253.5
(22) Date of filing: 14.06.2024
(51) Int. Cl.: F02D 19/06, F02D 41/00, F02B 43/10, F02M 21/02, F02M 25/12, F02D 19/08

(54) **AN INTERNAL COMBUSTION ENGINE SYSTEM AND A METHOD FOR CONTROLLING SUCH**

(71) Applicant: Aurobay Sweden AB, 418 78 Göteborg (SE)
(72) Inventor: ROLANDSON, Ola, 468 90 Vänersnäs (SE)
(74) Representative: Zacco Sweden AB

(57) **Abstract**

The present disclosure relates to an internal combustion engine, ICE, system (1) comprising an internal combustion engine (2), an ammonia tank (4), an air supply channel (6) connected to said ICE (2) for supplying air to said ICE (2) and a fuel reforming arrangement (3). Further, the system (1) comprises a fuel control arrangement (8) comprising at least a first fuel supply channel (8a) being connected between a second part of said fuel reforming arrangement (3) and said ICE (2). The system (1) is configured to: supply ammonia to said fuel reforming arrangement (3) and crack, by use of heat from said exhaust gases in the fuel reforming arrangement (3), the ammonia into cracked ammonia comprising nitrogen and hydrogen. Further, the system (1) is configured to supply air and at least one of said hydrogen and said nitrogen to said ICE (2) from the fuel reforming arrangement (3) via the fuel control arrangement (8).

## Description

### TECHNICAL FIELD

The present disclosure relates to an internal combustion engine system. Further, the present disclosure relates to a method for controlling an internal combustion engine system.

### BACKGROUND

Ammonia is being explored more and more during recent years as a potential fuel for vehicles, mainly due to the fact that it produces no carbon emissions when burned.

Further, advantages of ammonia as a fuel include a relatively high power-to-fuel-to-power (PFP) efficiency and an already existing large-scale distribution infrastructure. Furthermore, ammonia has a high-octane rating of 110-130 and a narrow flammability range, making it relatively safe in terms of explosion risks.

On the other hand, ammonia is toxic, emits significant levels of pollutants upon combustion (NOx and NH₃ residuals), and has an overall relatively low reactivity as a fuel. Ammonias low flame speed and high ignition temperature 651 °C (compared to Diesel 210 °C) requires H₂ to assist NH₃ combustion in an internal combustion engine (ICE).

Ammonia can be converted to hydrogen (H₂) through thermal decomposition or catalytic cracking, which is the most common means of hydrogen generation from ammonia.

Thermodynamically, 98-99% conversion of ammonia to hydrogen is possible at temperatures as low as 425 °C.

Nonetheless, in order to crack the ammonia into combustible hydrogen, a significant amount of energy is required. Accordingly, this means that the overall efficiency of using ammonia as a fuel is reduced. For a vehicle, this diminishes the net energy available for propulsion. Further, the vehicles need extra systems to handle the cracking process, adding complexity, weight and costs.

Based on the above, in order to enable vehicles to use ammonia as a fuel, there is a need for a more efficient internal combustion engine system in the vehicle which is compact, yet operable to handle the ammonia in an energy efficient manner.

Thus, there is room for ammonia based internal combustion engine systems of the present art to explore the domain to provide an improved internal combustion engine system.

### SUMMARY

It is therefore an object of the present disclosure to alleviate at least some of the mentioned drawbacks to provide an internal combustion engine (ICE) system that uses ammonia as a fuel.

The present disclosure is at least partly based on the insight that an ICE system which receives heat from exhaust gases of a fuel reforming arrangement is more energy, and space efficient than conventional ICE systems using ammonias as a fuel.

The present disclosure provides an ICE system comprising an internal combustion engine, an ammonia tank and an air supply channel connected to said ICE for supplying air to said ICE (such as ambient air from a surrounding environment). Further, the ICE system comprises a fuel reforming arrangement having a first part being connected between (and preferably physically connected to) an exhaust manifold of said ICE and an exhaust output line. Further, the ICE system comprises a fuel control arrangement comprising at least a first fuel supply channel being connected between a second part/portion of said fuel reforming arrangement and said ICE.

The system is configured to supply ammonia to said fuel reforming arrangement, wherein the ammonia is supplied via a primary fuel line connected between the fuel reforming arrangement and the ammonia tank. Further, the system is configured to crack (e.g. at around , by use of (only) heat from said exhaust gases in the fuel reforming arrangement, the ammonia into cracked ammonia comprising nitrogen and hydrogen. The fuel reforming arrangement may be nickel based, or be based on any other suitable catalyst material for cracking ammonia efficiently. Moreover, the system is configured to supply at least one of said hydrogen and said nitrogen to said ICE from the fuel reforming arrangement via the fuel control arrangement. Accordingly, the fuel control arrangement may receive, the at least one hydrogen and nitrogen directly from the fuel reforming arrangement. Furthermore, the system is configured to supply air to said ICE from said air-supply channel. The air may react with the fuel at the inlet manifold or cylinders.

Advantageously, the system provides an efficient configuration for supplying at least one of hydrogen and nitrogen to said ICE. Specifically, as the system is operable to crack, by use of heat from said exhaust gases in the fuel reforming arrangement, the ammonia into cracked ammonia comprising nitrogen and hydrogen. The fuel reforming arrangement may be used for both treating exhaust gases coming from the combustion process (exhaust manifold) and to crack the ammonia for usage to feed the ICE.

The system may be configured to supply, from the fuel control arrangement, only hydrogen, or hydrogen and nitrogen, the ratio between hydrogen and hydrogen/nitrogen may be controlled. In some aspects, only hydrogen is supplied (e.g. at a specific vehicle state hydrogen is supplied along with ammonia), then the amount of hydrogen released from the buffer tank may be controlled.

Preferably, but not necessarily, the ICE system is an ammonia ICE system with hydrogen assisted combustion. In other words, ammonia may be directly fed to the ICE in parallel as the fuel control arrangement supplies hydrogen and nitrogen to the ICE. I.e. the ICE system may comprise a second fuel supply channel, wherein the system is configured to, in parallel to supplying said ammonia to said fuel reforming arrangement, supply, from the ammonia tank, (substantially) pure ammonia to said ICE via the second fuel supply channel. Accordingly, ammonia may be used as a main fuel source in the ICE system (liquid or gas state) in addition of a variable amount of hydrogen to improve ammonia flammability properties. The secondary fuel supply channel may be separate from the first supply channel and the primary fuel line. Accordingly, the secondary supply channel may have an individual connection to the ammonia tank. The ammonia tank may be pressurized to about 20 bar or have any other pressure required to maintain ammonia at liquid phase.

In some aspects, the fuel control arrangement comprises a buffer tank at said first fuel supply channel, wherein the system is configured to receive, in the fuel control arrangement, at least one of the hydrogen and the nitrogen (directly) from the reforming arrangement. Further, the system is configured to store the hydrogen and/or nitrogen in said buffer tank. Moreover, the system is configured to release, the hydrogen and/or nitrogen from said buffer tank to said ICE at a specific vehicle state or in response to a control signal.

Advantageously, the hydrogen and/or nitrogen may be released when needed from the buffer tank to e.g. support a specific vehicle state/engine load. A specific vehicle state may be cold start, transient driving or a state in which the vehicle needs a torque/power (e.g. a performance state) exceeding a threshold.

The first fuel supply channel may comprise a compressor, wherein the system is configured to compress at least one of the nitrogen and the hydrogen prior to storing it in the buffer tank.

An advantage of this is that a greater volume of constituents can be stored at the buffer tank as they are compressed. The compressing may be performed by a mechanical compressor.

In some aspects herein, the first fuel supply channel may comprise a filter device, wherein the system is configured to filter out, by the filter device, at least a part of the nitrogen, prior to storing a remaining part of the cracked ammonia in said buffer tank. Then, the remaining part of the cracked ammonia will be (preferably substantially pure) hydrogen. Thus, the filter device may be between the fuel reforming arrangement and the buffer tank, up-streams of the fuel reforming arrangement.

Advantageously, hydrogen may be variably used in combustion according to transient need. For example, a first amount may be released to enable fast transients and higher RPM, and a second amount may be released at low RPM where a longer flame duration is acceptable. Accordingly, the second amount may be lower than the first amount.

Stored hydrogen may also be used in conjunction with secondary air injection as chemical heat source to enable the fuel reforming arrangement to be heated at engine start. Accordingly, the system may, at engine start, release stored hydrogen in conjunction with an air injection at engine start to facilitate rapid heating of the fuel reforming arrangement.

In some aspects, the ICE system comprises a third fuel supply channel for supplying cracked ammonia to said ICE, wherein the system is configured to divide the cracked ammonia between the first fuel supply channel and the third fuel supply channel. The dividing of the cracked ammonia is then performed upstream of the fuel reforming arrangement, i.e. the cracked ammonia is divided between two separate channels.

Advantageously, this allows the primary fuel line to be a common line which is split upstream of the reformer. Thereby, increasing compactness of the system.

The two separate channels may comprise means operable to handle the cracked ammonia in different manners. For example, the first fuel supply channel may comprise a filter device for filtering out the nitrogen constituents from the cracked ammonia so to obtain substantially pure hydrogen. Then, the third fuel supply channel may be operable to supply the cracked ammonia with both constituents (hydrogen and nitrogen) to the ICE. Accordingly, each channel may comprise valves, pumps or any other suitable means for variably adjusting a ratio between fluid supplied from respective channel. Hence, the amount of 'hydrogen 'relative to 'hydrogen and nitrogen' may be variably and continuously adjusted based on load case/state of the vehicle of the ICE. E.g. at a cold-start state, the third fuel supply channel may be shut-off for a time-period so that only substantially pure hydrogen is supplied to the ICE together with air. Then, as the amount flowing from respective channel is continuously adjusted, the system may, as the engine/catalyst of the ICE gets heated, adjust the flow so that the flow from the first fuel supply channel is reduced while the flow from the third fuel supply channel is opened. Thus, each valve may be an electrically controlled valve having a plurality of positions including a closed position, and a plurality, or at least one open positions. The ratio may be adjusted so to control burn rate and temperature of the exhaust gases i.e. to support specific vehicle states optimally.

Thus, specifically, the first fuel supply channel may comprises a filter device, preferably a proton exchange membrane (PEM) device, wherein the system is configured to, after that said cracked ammonia is split into each channel:
- filter out, by the filter device, at least a part of the nitrogen from the cracked ammonia flowing in the first fuel supply channel
- supply a remaining part of said cracked ammonia (which is pure hydrogen) in said first fuel supply channel to said ICE
- supply the cracked ammonia flowing in the third fuel supply channel to said ICE.

The system may, also be configured to determine (E.g. by use of sensor data obtained by a plurality of sensors) a ratio/divident between an amount of said remaining part and an amount of said cracked ammonia that should be supplied to said ICE. In other words H₂ to N₂/H₂ ratio may be controlled to match a desired load case. Accordingly, a supply of constituents allocated to the ICE may be directed by the fuel control arrangement with the aid of one or more valves, sensor devices and pumps. The allocation may be regulated based on a vehicle state/engine load or in response to a control signal.

In some aspects, the exhaust output line is connected to an emission control unit, wherein the primary fuel line comprises a branch section connected to said emission control unit so to supply ammonia to said emission control unit, the ammonia serving as a reducing agent. The emission control unit may be a catalyst, e.g. a selective catalytic reduction (SCR) catalyst used in exhaust aftertreatment to reduce harmful pollutants from emissions. The ammonia may then serve to produce harmless gases/vapor which is to be dispatched into the environment, e.g. nitrogen gas and water vapor. Urea is traditionally used in Selective Catalytic Reduction (SCR) reactions to reduce the NOx pollutants in exhaust gases from combustion from diesel, dual fuel, and lean-burn natural gas engines. The adBlue system, injects a water-based urea solution into the exhaust system. Ammonia (NH₃) is first produced by the hydrolysis of urea reacts with nitrogen oxides (NOx) and is converted into nitrogen gas (N₂) and water within the catalytic converter. Hence, the above solution may replace urea.

It should be noted that a PEM is preferable but the PEM may be interchanged with e.g. an osmosis membrane.

In some aspects, the first part/portion comprises a reformer, wherein the second part comprises a heat exchanger, wherein the reformer and the heat exchanger are connected, wherein the system is configured to, when supplying ammonia to the fuel reforming arrangement:
- circulate the ammonia through at least one of the heat exchanger and the reformer to obtain heat from exhaust gases prior to supplying the cracked ammonia to the fuel control system.

The reforming arrangement may comprise a nickel based catalyst, or any other suitable substance serving as a catalyst for splitting ammonia into hydrogen and nitrogen. The reformer may be a three-way catalyst.

The present disclosure further provides a vehicle comprising the ICE system according to any aspect herein.

Further, the present disclosure provides a method for controlling the ICE system according to any aspect herein, the method comprising the steps of supplying ammonia to said fuel reforming arrangement, wherein the ammonia is supplied via a primary fuel line connected between the fuel reforming arrangement and the ammonia tank. Further, the method comprises cracking, by use of heat from said exhaust gases in the fuel reforming arrangement, the ammonia into cracked ammonia comprising nitrogen and hydrogen. Moreover the method comprises the steps of supplying at least one of said hydrogen and said nitrogen to said ICE from the fuel reforming arrangement via the fuel control arrangement and simultaneously supplying air to said ICE from said air-supply channel.

The primary fuel line may have a first and an opposite second end, the first end being connected to the ammonia tank, or to the ammonia tank via a heater. The heater may be arranged to heat liquid ammonia to gaseous form. The second end may be connected to the fuel reforming arrangement, specifically a heat exchanger thereof. The line may be pressurized so to allow the flow of fluid (gaseous ammonia) upstreams towards the heat exchanger and subsequently fuel control arrangement.

The air may be supplied to the ICE via a turbocharger, the turbocharger may be connected between the exhaust manifold and the fuel reforming arrangement.

The system herein, and steps thereof performed may be partially performed by a control circuitry which may be operable to provide control signals to supply and initiate a cracking operation to crack.

The ICE of the system may comprise any other suitable component as will be appreciated by a skilled person in the art, such as pistons and connecting rods, a crankshaft, a valvetrain, cooling system and lubrication system.

### BRIEF DESCRIPTION OF THE DRAWINGS

These and other features and advantages of the present disclosure will now be further clarified and described in more detail, with reference to the appended drawings;
- Figures 1-4: illustrates schematically an ICE system according to some aspects of the present disclosure;
- Figure 5: illustrates a method in the form of a flowchart according to some aspects of the present disclosure; and
- Figure 6: illustrates an objective view of a vehicle according to some aspects of the present disclosure.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic.

Put differently, it may refer either to all elements, one element or combination of two or more elements of a set of elements. For example, the wording "A, B and C" may be interpreted as A or B or C, A and Band C, Aand B, BandC, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "cracked ammonia" may refer to the constituent elements of ammonia, namely nitrogen and hydrogen.

The term "ICE system" herein may refer to a system arranged to be integrated into a vehicle.

The term "line" or "channel" may refer to a passageway for transferring a fluid. The channels and lines herein may be formed by any suitable material such as any type of steel, iron or aluminium

The term "ICE" or internal combustion engine may refer to an engine conventionally used in vehicles. The ICE including e.g. valves (intake/exhaust), cylinders, pistons, crankshafts, camshafts and an ignition system.

The term "fuel" as used herein may refer to the fluid which is to be supplied to the ICE 2 and may be for example pure ammonia, nitrogen-hydrogen mixture (cracked ammonia) and/or hydrogen.

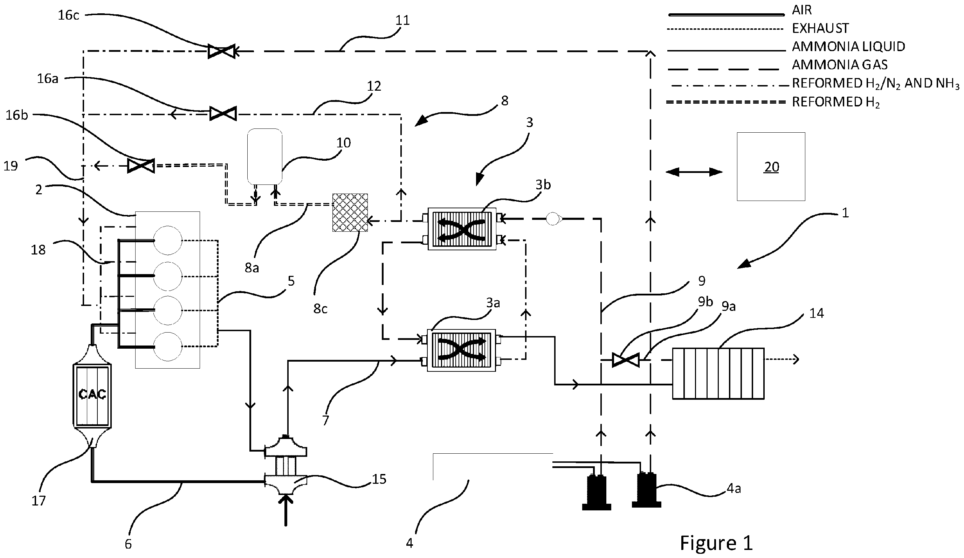

Figure 1 illustrates schematically an ICE system 1 according to some aspects of the present disclosure. Figure 1 illustrates that the system 1 comprises an internal combustion engine 2, an ammonia tank 4, an air supply channel 6 connected to said ICE 2 for supplying/injecting air to said ICE 2 and a fuel reforming arrangement 3 having a first part 3a being connected between an exhaust manifold 5 of said ICE and an exhaust output line 7. Further, the system 1 of Figure 1 comprises a fuel control arrangement 8 comprising at least a first fuel supply channel 8a being connected between a second part 3b of said fuel reforming arrangement 3 and said ICE 2. The ammonia fuel tank 4 may store ammonia in liquid state which, may be heated to a gaseous state by a heater prior to being supplied through the primary fuel line 9. The ICE 2 may have a plurality of exhaust pipes forming an exhaust manifold 5 and a plurality of inlet pipes forming an inlet manifold. As illustrated in Figure 1, the system 1 comprises a primary fuel line 9 which may be in the form of a channel comprising two ends, one connected to the tank 4 (via heater 4a) and one connected to the fuel reforming arrangement 3b. Each line in the system 1 may be in the form of a channel for transferring fluid.

The system 1 of Figure 1 is configured to supply ammonia in gaseous form to said fuel reforming arrangement 3, wherein the ammonia is supplied via/through the primary fuel line 9 connected between the fuel reforming arrangement 3 and the ammonia tank 4 i.e. by being transferred therethrough. The fuel reforming arrangement 3 may be configured to, upon receiving the ammonia in gaseous state, crack/reform, by use of heat from said exhaust gases in the fuel reforming arrangement 3, the ammonia into cracked ammonia comprising nitrogen and hydrogen. Accordingly, the exhaust gases coming from the exhaust manifold 5 may be directly fed to the fuel reforming arrangement 3 or indirectly fed thereto e.g. via a turbocharger 15.

Specifically, in some aspects, the exhaust gases may be fed to a reformer 3a of the fuel reforming arrangement 3 arranged to reduce pollutants in the exhaust gases. Further, the exhaust gases may, through reformer 3a and/or heat exchanger 3b, be used so to transfer heat to the gaseous ammonia in the primary fuel line 9 so to crack the ammonia into its constituents (which may mainly occur in the reformer 3a). This may also be referred to as thermal decomposition, catalytic cracking, or thermal reforming which allows the ammonia to be cracked into nitrogen N₂ (g) and hydrogen H₂ (g).

Figure 1 illustrates that the fuel reforming arrangement 3, at its heat exchanger 3b comprises an output which outputs cracked ammonia. Accordingly, the ammonia may be transferred through a common individual line (having a single stream) through an input of said heat exchanger 3b so to be outputted as cracked ammonia comprising hydrogen and nitrogen from an output of said heat exchanger. The heat exchanger may be in fluidic communication with the reformer 3a.

Figure 1 further illustrates that the system 1 is configured to supply at least one of said hydrogen and said nitrogen to said ICE 2 from the fuel reforming arrangement 3 via the fuel control arrangement 8. Moreover, Figure 1 illustrates that the system 1 is configured to supply air to said ICE 2 from said air-supply channel 6. The air may be supplied from an ambient environment via the turbocharger 15, specifically via a compressor part of the turbocharger 15. Accordingly, a turbine part of the turbocharger may be connected to said reformer 3a (which may be a three-way catalyst). The air supplied may be cooled by a cooling device 17 prior to reaching the ICE 2 from the inlet manifold 18. Specifically, the turbine part of the turbocharger 15 may be arranged so that any exhaust gas from the exhaust manifold 5 transfers to the fuel reforming arrangement 3 through the turbine part of the turbocharger 15. On the opposite side of the turbocharger 15, the compressor part of the turbocharger may be arranged so that air drawn in is transferred towards the ICE 2 through the compressor part of the turbocharger 15.

Nonetheless, the system does not need a turbocharger 15 to function, and in some aspects, the ambient air may be supplied via any suitable air-input means. Also, exhaust gas from the exhaust manifold 5 may transfer to the fuel reforming arrangement directly or indirectly without a turbocharger 15.

Figure 1 further illustrates that the fuel control arrangement 8 comprises a buffer tank 10 at said first fuel supply channel 8a. Accordingly, Figure 1 illustrates that the system 1 is configured to receive, in the fuel control arrangement 8, at least one of the hydrogen and the nitrogen from the reforming arrangement 3 (specifically from the heat exchanger thereof 3b). Subsequently, the system 1 may, as illustrated in Figure 1, store the hydrogen and/or nitrogen in said buffer tank 10 so to release, the hydrogen and/or nitrogen from said buffer tank 10 to said ICE 2 at a specific vehicle state or in response to a control signal. Vehicle state may be start up (e.g. upon detecting an upcoming engine crank or an initiated engine crank), start up with cold start or vehicle state may be a performance state in which the vehicle is in need of torque exceeding a limit. The buffer tank 10 may store the fluid at a pre-determined pressure.

As illustrated in Figure 1, in some aspects, the first fuel supply channel 8a comprises a filter device 8c, preferably a proton exchange membrane (PEM) device, wherein the system 1 is configured to, by the filter device 8c, filter out, at least a part of the nitrogen, prior to storing a remaining part of the cracked ammonia in said buffer tank 10. In other words, pure hydrogen is stored in said buffer tank. The PEM device may have an anode, cathode and a membrane therebetween. The filter device may filter the cracked ammonia so to receive hydrogen with a purity over 90%, specifically, in some aspects where a PEM device is used, the purity may be above 99%.

Figure 1 illustrates an aspect of the system 1 in which the system 1 is configured to, in parallel to supplying said ammonia to said fuel reforming arrangement 3, supply, from the ammonia tank 4, ammonia to said ICE 2 (in gaseous or liquid state) via the second fuel supply channel 11. Accordingly, as illustrated in Figure 1, the ICE system 1 may supply ammonia in gaseous state to the ICE while simultaneously supplying hydrogen and/or hydrogen and nitrogen.

Figure 1 illustrates that the parallel second supply channel 11 and channels from the fuel control arrangement 8 may connect to a common line 19 which is connected to an inlet manifold 18 of the ICE 2. Each line 11, 8a, 12 may have a valve 16a, 16b, 16c for regulating a flow through the line 11, 8a, 12 to the common line 19. Accordingly, each line 11, 8a, 12 may connect to said common line 19 upstream of a valve 16a thereof.

Figure 1 illustrates an aspect in which the ICE system 1 comprises a third fuel supply channel 12 for supplying cracked ammonia to said ICE 2, wherein the system 1 is configured to divide the cracked ammonia between the first fuel supply channel 8a and the third fuel supply channel 12. I.e. after/upstream of the fuel reforming arrangement 8 the first fuel supply line 9 is split into two channels, the first supply channel 8a and the third fuel supply channel 12. In Figure 1, the first fuel supply channel 8a comprises the filter device 10, therefore, the first supply channel 8a will supply hydrogen to the ICE 2 while the third fuel supply channel 12 will supply cracked ammonia to the ICE 2, i.e. hydrogen and nitrogen.

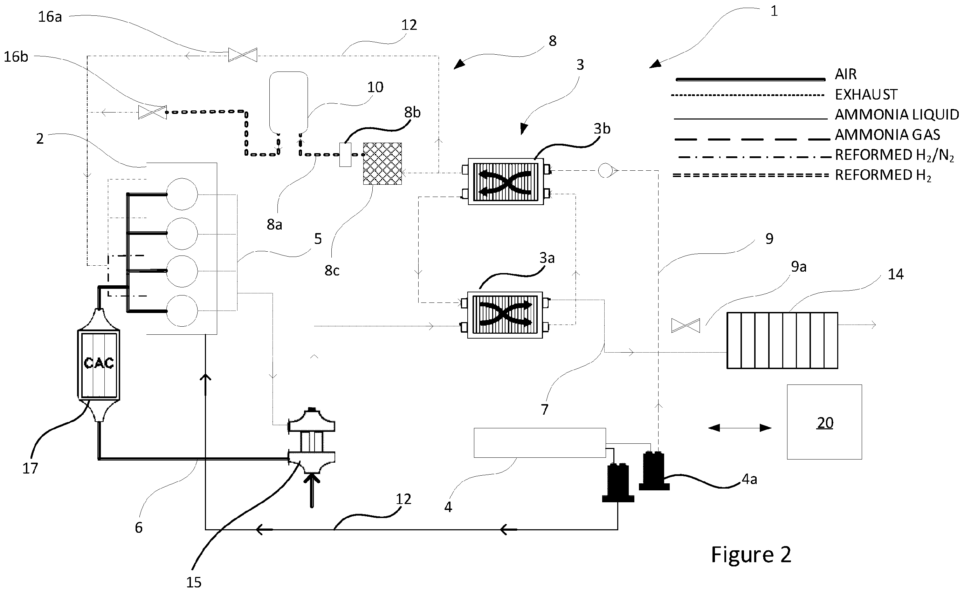

In operation, the system 1 may be configured to, adjust the flow of fluid to the ICE 2 based on vehicle state/engine load. For example, if there is a cold start the system 1 may regulate each of the valves 16a-c individually so to maximize supply of hydrogen to the ICE 2. Nonetheless, the system 1 may dynamically and continuously regulate each of the valves 16 (in conjunction and synchronization with each other) so to adapt the flow of fluid based on vehicle state. The system 1 may obtain data indicative of vehicle state by one or more sensor devices (the foregoing paragraph is also applicable for the aspects of Figures 2-4).

Accordingly, the system 1 may regulate the valves 16a-c to adapt amounts/ratios of ammonia, hydrogen and cracked ammonia (hydrogen and nitrogen) that is supplied to the ICE 2, via the lines 8a, 12, 11. The valves may be electronically adjustable valves, such as two-way valves. However, in other aspects the system may regulate other components (not shown) such as pumps. The system may also regulate an amount of air injection to the ICE 2 by valves (not shown) or by any other means such as controlling the amount of intake air from the ambient environment.

Figure 1 further illustrates that the system may comprise control circuitry 20. The control circuitry 20 may be operable to output control signals to components and devices of the system 1 so to operate the system 1 according to any aspect herein. The control circuitry 20 may receive sensor data and determine vehicle (load) state/engine load continuously based on said sensor data. The sensor data may be received from one or more sensor devices of the system 1 (not shown). For example, the sensor data may be data indicative of a detected engine crank, temperature in the ICE 2, temperature of one or more component in the reformer arrangement 3, etc. The control circuitry 20 may also monitor amount of stored hydrogen in the tank 10 so to derive an amount that is releasable to the ICE 2. The system 1 may operate in accordance with a pre-defined scheme, the pre-defined scheme may be stored in the memory device of the control circuitry 20. The pre-defined scheme may comprise instructions for controlling ratio of fluid through at least one of the lines 8a, 12, 11, preferably at least lines 8a, 12 based on an ongoing vehicle state/engine laod. I.e. the control circuitry 20 may output control signals based on said scheme, control signals being signals for controlling valves 16a-c, controlling the output of ammonia from the tank 4, releasing/maintaining fluid in the buffer tank 10 and flow of air through the air-supply line 6.

It should be noted that the control circuitry 10 may comprise one or more memory devices (not shown). The memory devices may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by the control circuitry 10. Each memory device may store any suitable instructions, data (such as temperature data obtained from sensors) or information, including a computer program, software, an application including one or more of logic, rules, code, tables, etc. and/or other instructions (such as instructions for maintaining/attaining a specific temperature of a reformer or for ratios of fuel types (hydrogen, ammonia, hydrogen/nitrogen) supplied to the ICE) capable of being executed by the control circuitry 10 and, utilized. The control circuitry 10 may further include, for example, one or more central processing units (CPUs), graphics processing units (GPUs) dedicated to performing calculations, and/or other processing devices. The control circuitry 10 may further comprise one or more interfaces (e.g. input/output interfaces) enabling the control circuitry 10 to output control signals for controlling components in the system 1 and receive data from e.g. temperature sensors. The control circuitry 10 may output fuel ratios and types at a graphical user interface (GUI) of a vehicle using the system 1. The control circuitry 10 may also receive commands, via the GUI, from the driver, the commands being indicative of a desired fuel ratio/fuel type that should be used at a present or future point in time.

Figure 1 illustrates that the fuel reformer arrangement 8 may comprise a reformer 3a, wherein the second part comprises a heat exchanger 3b, wherein the system 1 may be configured to, when supplying ammonia to the fuel reforming arrangement 3, circulate the ammonia through the heat exchanger to obtain heat from exhaust gases in the reformer prior to supplying the cracked ammonia to the fuel control system 8. However, in other aspects, the fuel reformer arrangement 8 may comprise a reformer 3a (i.e. not limited to both a reformer 3a and a heat exchanger 3b) which comprises said first and second portion. Then, the ammonia may be circulated through reformer, so to be reformed to cracked ammonia, prior to supplying the cracked ammonia to the fuel control system 8.

Figure 1 further illustrates that the exhaust output line 7 may be connected to an emission control unit 14 such as a catalytic converter, wherein the primary fuel line 9 comprises a branch section 9a connected to said emission control unit 14 so to supply ammonia to said emission control unit 14, the ammonia serving as a reducing agent. Accordingly, the primary fuel line 9 may comprise a branch for also supplying ammonia to said emission control unit 14. The emission control unit 14 may output the exhaust gases after treatment to the environment. Accordingly, the primary fuel line 9 may be operable to provide ammonia for exhaust after treatment as well as provide ammonia (which is cracked) to third and first supply lines 8a, 12. Advantageously, a compact arrangement is obtained. The branch section 9a may comprise a valve 9b for regulating flow of ammonia to the emission control unit 14 based on engine load state/vehicle state.

Engine load state may comprise at least one of idle load, light load, moderate load, heavy load, full load. Vehicle state may comprise cold-start, idle, warm-up, light load driving, moderate load driving, heavy load driving, cruise, deceleration, acceleration or any other suitable state. The exact number of states and transition points between these states may differ as appreciated by a skilled person in the art.

It should be noted that the ammonia tank may be a common single tank. However, the third supply line 11 may have its own individual heater for heating ammonia to gaseous state. Nonetheless, the common line 9 may also have its own individual heater.

Figure 2 illustrates schematically another aspect of the system 1 herein in which the line 12 has its own inlet to the ICE 2. Accordingly, the line 12 is at one end connected to the tank 4 and at its opposite end to the ICE 2, so to directly supply ammonia to said ICE. Compared to Figure 1, in which the line 12 merges with the common line 19 together with lines 12 and 8a so that the common line 19 leads any fluid therefrom to the ICE 2.

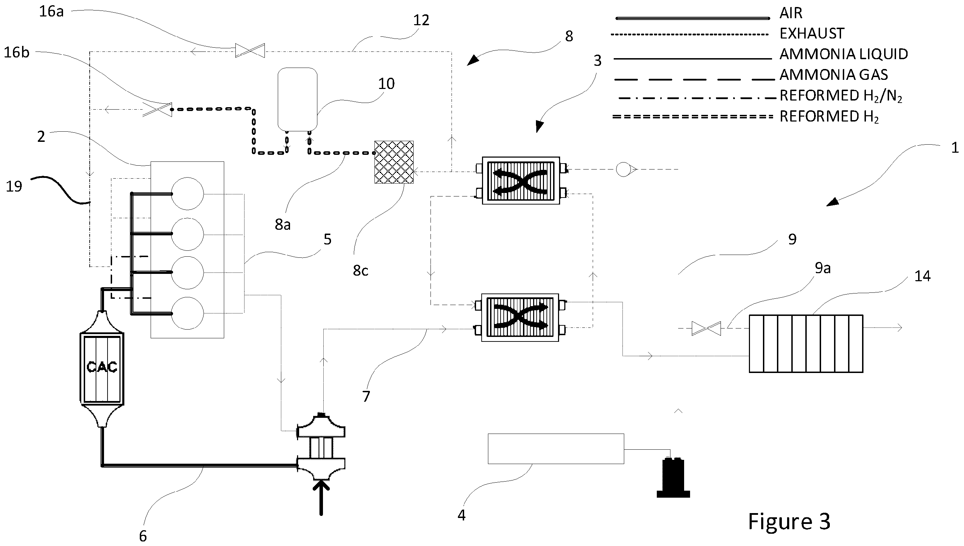

Figure 3 illustrates schematically another aspect of the system 1 herein in which there is no second supply channel 11. Accordingly, the ammonia follows the primary line 9 to the reformer arrangement 3 through a common single stream and after the reformer arrangement 3 the cracked ammonia is divided between the first and the third supply channel 8a, 12, wherein the first supply channel 8a filters out the nitrogen so to be able to supply pure hydrogen to the ICE. The third supply channel 8a receives cracked ammonia so to mix the cracked ammonia with the hydrogen in the common line 19 which supplies the mix to the ICE 2. The ratio between the cracked ammonia and the hydrogen may be, as previously described herein, regulated. The cracked ammonia may have a temperature of about 100 degrees °C when outputted by the reformer arrangement 3. Nonetheless, upon cracking the ammonia may have a temperature of at least 300 degrees °C.

It should be noted that any line/channel in any aspects of the system 1 may be pressurized or have any other means for facilitating flow of fluid as desired.

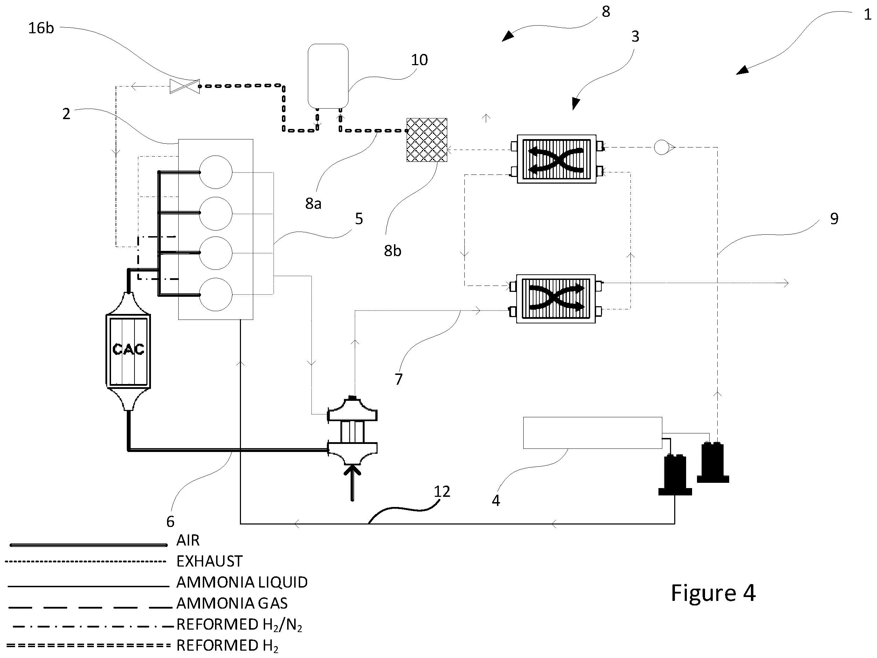

Figure 4 illustrates schematically another aspect of the system 1 herein in which there is no filter device. Instead, the cracked ammonia is directly stored in the tank 10 or preferably, compressed by a compressor 8b prior to being stored in the tank 10. It should be noted that the aspects of Figures 1-3 may also comprise a compressor (e.g. upstream of the filter device).

Accordingly, Figure 4 illustrates that the cracked ammonia may be supplied to the ICE 2 together with air (preferably compressed air) and ammonia. The ammonia in Figure 4 is supplied directly to the ICE 2 through the third supply line 12. The fluids may mix in the ICE 2 e.g. in the cylinders to form a mixture for ignition or at any other suitable part of the ICE 2 so to allow propulsion of a vehicle comprising the ICE 2. Figure 4 further illustrates that the exhaust gas may be directly outputted to the environment after passing through the reformer arrangement 3.

It should be noted that, with reference to each of Figures 1-4, that, based on user input to the vehicle (e.g. through a gas pedal of the vehicle), the ICE system 1 may output a specified total amount of ammonia from the ammonia tank 4. Nonetheless, the control circuitry 20 may be configured to determine, based on load state/vehicle state, whether the ammonia should be supplied as at least one of hydrogen, nitrogen/hydrogen and ammonia to said ICE. Also, the control circuitry 20 may determine, if more than one of said hydrogen, nitrogen/hydrogen and ammonia is determined to be supplied to said ICE 2, specified amounts for each supplied fluid, based on vehicle state/engine load.

It should also be noted that even though Figures 1-4 illustrates that the fuel reformer arrangement 3 comprises components 3a and 3b. In some aspects, the fuel reformer arrangement 3 may comprise a single reformer 3a (so to be void of heat exchanger 3b) having two parts so to transfer heat from the exhaust gases to crack the ammonia. The reformer 3a of the fuel reformer arrangement 3 may be a thermo chemical reformer (TCR) unit, or any other suitable unit (recuperative heat exchanger) which receives the ammonia and the exhaust gas so to allow heat from exhaust gas to transfer to the ammonia to crack the ammonia. Nonetheless, two units 3a, 3b are advantageous as two units can be so that the reformer 3a is filled with material for efficient conversion at high temperature, while the heat exchanger 3b may be utilized as heat exchanger that ensures that the ammonia gas temperature is heated to the required 500°C for conversion.

This way, reformer 3a can be made smaller and less material may be used, resulting in a cheaper system.

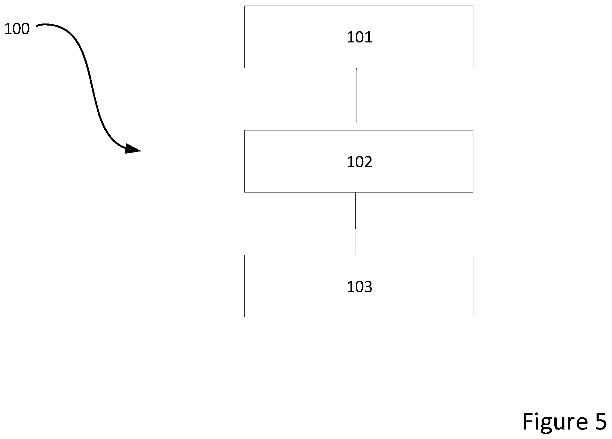

Figure 5 illustrates a flowchart of a method 100 for controlling the internal combustion engine system, ICE system 1 according to any aspect herein, wherein the method 100 comprises the steps of supplying 101 ammonia to said fuel reforming arrangement 3, wherein the ammonia is supplied via a primary fuel line 9 connected between the fuel reforming arrangement 3 and the ammonia tank 4. Further, the method 100 comprises the steps of cracking 102, by use of heat from said exhaust gases in the fuel reforming arrangement 3, the ammonia into cracked ammonia comprising nitrogen and hydrogen. Further, the method comprises the step of supplying 102 at least one of said hydrogen and said nitrogen to said ICE 2 from the fuel reforming arrangement 3 via the fuel control arrangement 8 and supplying 103 air to said ICE 2 from said air-supply channel i.e. to mix with the fuel (which is hydrogen/nitrogen, hydrogen and/or ammonia).

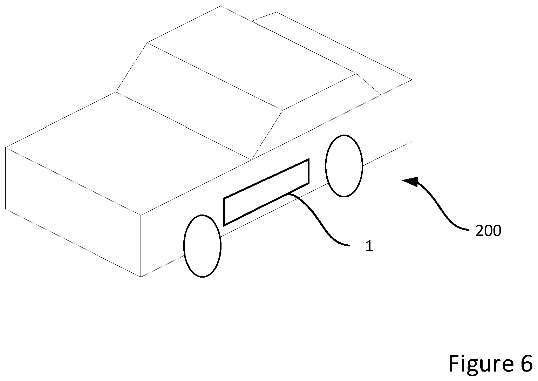

Figure 6 illustrates an objective view of a vehicle 200 comprising the ICE system 1 according to any aspect herein. The ICE system 1 of Figure 6 is illustrated in the vehicle 200 schematically.

## Claims

1. An internal combustion engine, ICE, system (1) comprising:
- an internal combustion engine (2);
- an ammonia tank (4);
- an air supply channel (6) connected to said ICE (2) for supplying air to said ICE (2);
- a fuel reforming arrangement (3) having a first portion being connected between an exhaust manifold (5) of said ICE (2) and an exhaust output line (7);
- a fuel control arrangement (8) comprising at least a first fuel supply channel (8a) being connected between a second portion of said fuel reforming arrangement (3) and said ICE (2);
wherein the system (1) is configured to:
- supply ammonia to said fuel reforming arrangement (3), wherein the ammonia is supplied via a primary fuel line (9) connected between the fuel reforming arrangement (3) and the ammonia tank (4);
- crack, by use of heat from said exhaust gases in the fuel reforming arrangement (3), the ammonia into cracked ammonia comprising nitrogen and hydrogen;
- supply at least one of said hydrogen and said nitrogen to said ICE (2) from the fuel reforming arrangement (3) via the fuel control arrangement (8);
- supply air to said ICE (2) from said air-supply channel.

2. The ICE system (1) according to claim 1, wherein the fuel control arrangement (8) comprises a buffer tank (10) at said first fuel supply channel (8a), wherein the system (1) is configured to:
- receive, in the fuel control arrangement (8), at least one of the hydrogen and the nitrogen from the reforming arrangement (3);
- store the hydrogen and/or nitrogen in said buffer tank (10);
- release, at least a part of the hydrogen and/or nitrogen from said buffer tank (10) to said ICE (2) at a specific vehicle state or in response to a control signal.

3. The system (1) according to any one of the preceding claims, wherein the first fuel supply channel (8a) comprises a compressor (8b) , wherein the system (1) is configured to:
- compress at least one of the nitrogen and the hydrogen prior to storing it in the buffer tank (10).

4. The system (1) according to any one of the preceding claims, wherein the first fuel supply channel (8a) comprises a filter device (8c), preferably a proton exchange membrane, PEM, device, wherein the system (1) is configured to:
- filter out, by the filter device (8c), at least a part of the nitrogen, prior to storing a remaining part of the cracked ammonia in said buffer tank (10).

5. The ICE system (1) according to any one of the preceding claims, wherein the ICE system (1) comprises a second fuel supply channel (11), wherein the system (1) is configured to, in parallel to supplying said ammonia to said fuel reforming arrangement (3):
- supply, from the ammonia tank (4), ammonia to said ICE (2) via the second fuel supply channel (11).

6. The ICE system (1) according to claim 5, wherein the second supply channel (11) is separate from the first supply channel (8a) and the primary fuel line (9).

7. The ICE system (1) according to any one of the claims 1-6, wherein the ICE system (1) comprises a third fuel supply channel (12) for supplying cracked ammonia to said ICE, wherein the system (1) is configured to:
- divide the cracked ammonia between the first fuel supply channel (8a) and the third fuel supply channel (12).

8. The ICE system (1) according to claim 7, wherein the first fuel supply channel (8a) comprises a filter device (8c), preferably a proton exchange membrane, PEM, device, wherein the system (1) is configured to:
- filter out, by the filter device (8c), at least a part of the nitrogen from the cracked ammonia flowing in the first fuel supply channel (8a);
- supply a remaining part of said cracked ammonia in said first fuel supply channel (8a) to said ICE (2);
- supply the cracked ammonia flowing in the third fuel supply channel (12) to said ICE.

9. The ICE system (1) according to claim 8, wherein the remaining part comprises at least 90% hydrogen.

10. The ICE system (1) according to claim 8 or 9, wherein the system (1) is configured to:
- regulate a ratio between the cracked ammonia and the remaining part that is supplied to said ICE (2) from said first fuel supply channel (8a) and third fuel supply channel (12) respectively.

11. The ICE system (1) according to claim 10, wherein the ratio is regulated by at least one valve (16a, 16b) based on a vehicle state or in response to a control signal.

12. The ICE system (1) according to any one of the preceding claims, wherein the exhaust output line (7) is connected to an emission control unit (14), wherein the primary fuel line (9) comprises a branch section (9a) connected to said emission control unit (14) so to supply ammonia to said emission control unit (14), the ammonia serving as a reducing agent.

13. The ICE system (1) according to any one of the preceding claims, wherein the first portion comprises a reformer (3a), wherein the second portion comprises a heat exchanger (3b), wherein the reformer and the heat exchanger (3a, 3b) are connected, wherein the system is configured to, when supplying ammonia to the fuel reforming arrangement (3):
- circulate the ammonia through the heat exchanger and the reformer prior to supplying the cracked ammonia to the fuel control system (8).

14. A vehicle (200) comprising the ICE system (1) according to any one of the preceding claims.

15. A method (100) for controlling the internal combustion engine system, ICE system (1) according to any one of the claims 1-13, wherein the method (100) comprises:
- supplying (101) ammonia to said fuel reforming arrangement (3), wherein the ammonia is supplied via a primary fuel line (9) connected between the fuel reforming arrangement (3) and the ammonia tank (4);
- cracking (102), by use of heat from said exhaust gases in the fuel reforming arrangement (3), the ammonia into cracked ammonia comprising nitrogen and hydrogen;
- supplying (102) at least one of said hydrogen and said nitrogen to said ICE (2) from the fuel reforming arrangement (3) via the fuel control arrangement (8);
- supplying (103) air to said ICE (2) from said air-supply channel.
